# EUROPÄISCHE PATENTSCHRIFT

(11) **EP 2 125 157 B1**
(45) Veröffentlichungstag und Bekanntmachung des Hinweises auf die Patenterteilung: **18.10.2017**
(21) Anmeldenummer: 08717060.1
(22) Anmeldetag: 22.02.2008
(51) Int. Cl.: B01D 46/52

(54) **FLUIDFILTER MIT EINEM IN EIN FILTERGEHÄUSE EINSETZBAREN FILTERELEMENT**
FLUID FILTER WITH A FILTER ELEMENT WHICH CAN BE INSERTED INTO A FILTER HOUSING
FILTRE POUR FLUIDE AVEC UN ÉLÉMENT FILTRANT POUVANT ÊTRE INSÉRÉ DANS UN BOÎTIER DE FILTRE

(30) Priorität: 22.02.2007 DE 202007002786 U
(43) Veröffentlichungstag der Anmeldung: 02.12.2009
(73) Patentinhaber: Mann + Hummel GmbH, 71638 Ludwigsburg (DE)
(72) Erfinder: GILLENBERG, Eric, 67346 Speyer (DE); WINTER, Manfred, 74906 Bad Rappenau (DE); RUHLAND, Klaus-Dieter, 67149 Meckenheim (DE); PAWLIK, Richard, 67354 Römerberg (DE)
(86) Internationale Anmeldenummer: PCT/EP2008/052199
(87) Internationale Veröffentlichungsnummer: WO 2008/102011

(56) Entgegenhaltungen:
- WO-A-03/020398
- WO-A-2004/039476
- US-A- 5 368 621
- US-A1- 2004 182 777

## Beschreibung

### Technisches Gebiet

Die Erfindung bezieht sich auf einen Fluidfilter mit einem in ein Filtergehäuse einsetzbaren Filterelement nach Anspruch 1.

### Stand der Technik

Aus der WO 03/020398 A1 ist ein zylindrisches Filterelement mit an der Endkappe ausgebildeten Nockenbahnen bekannt, die mit gehäuseseitig befestigten Nocken in Eingriff bringbar sind.

In der DE 197 46 752 A1 wird ein Flüssigkeitsfilter beschrieben, der zur Filtration von Öl oder Kraftstoff in Brennkraftmaschinen eingesetzt wird. Der Flüssigkeitsfilter umfasst in einem Filtergehäuse ein hohlzylindrisch ausgebildetes Filterelement, welches radial von der zu filtrierenden Flüssigkeit zu durchströmen ist, wobei die Außenfläche des Filterelements die Rohseite und die Innenfläche die Reinseite bildet. Um einen unmittelbaren Übertritt der zu filtrierenden Flüssigkeit von der Roh- zur Reinseite unter Umgehung des Filterelementes zu verhindern, ist an den axialen Stirnseiten jeweils ein Dichtring angeordnet, der das Filterelement gegenüber dem Gehäuse strömungsdicht separiert. Der Dichtring sitzt in einer Ausnehmung einer axialen Endscheibe an jeder Stirnseite des Filterelementes.

Bei der Montage wird das Filterelement bei abgenommenem Gehäusedeckel axial in den Gehäuseinnenraum eingeführt, anschließend wird der Deckel verschlossen.

### Offenbarung der Erfindung

Der Erfindung liegt die Aufgabe zugrunde, mit einfachen konstruktiven Maßnahmen einen Fluidfilter in der Weise auszubilden, dass eine Falschmontage der Bauteile des Fluidfilters, insbesondere des Filterelementes ausgeschlossen ist.

Diese Aufgabe wird erfindungsgemäß mit den Merkmalen des Anspruches 1 gelöst. Die Unteransprüche geben zweckmäßige Weiterbildungen an.

Der erfindungsgemäße Fluidfilter, der zur Filtration von Flüssigkeiten, wie z.B. Öl oder Kraftstoff in Brennkraftmaschinen oder auch zur Filtration von Gasen, beispielsweise Verbrennungsluft in Brennkraftmaschinen oder Atemluft für den Fahrzeuginnenraum eingesetzt wird, umfasst in einem Filtergehäuse ein Filterelement, welches von dem Fluid zu durchströmen ist. Zwischen dem Filterelement und der Innenwandung des das Filterelement aufnehmenden Gehäuseinnenraumes ist ein Dichtungselement eingesetzt, das die Rohseite von der Reinseite des Filterelements separiert, damit ein versehentlicher Übertritt unmittelbar von der Roh- zur Reinseite verhindert ist. Für eine korrekte Montage sind Montagehilfselemente vorgesehen, die am Filterelement bzw. an einem Sekundärfilterelement und am Gehäuse des Fluidfilters angeordnet sind, wobei filterseitiges und gehäuseseitiges Montagehilfselement in korrespondierender Weise zueinander ausgebildet sind, so dass in der Einbaulage filterseitiges und gehäuseseitiges Montagehilfselement ineinander greifen. Das Filterelement ist scheibenförmig ausgebildet und von einem Rahmen eingefasst. Das Montagehilfselement ist als separat ausgebildetes Blockierteil ausgebildet, das am Filterelement angeordnet ist, wobei das Blockierteil in einer Ausnehmung am Filterelement einführbar ist und an dem Rahmen angeordnet ist.

Die Montagehilfselemente stellen die korrekte Einbaulage sicher, da mit ihrer Hilfe eine eindeutige Position in der endgültigen Einbaulage sichergestellt werden kann. Dies betrifft zum einen die relative Winkelposition des Filterelementes in Bezug auf das Gehäuse des Fluidfilters, zum andern aber auch - kumulativ oder alternativ - die axiale Einbaulage des Filterelementes und schließlich - ebenfalls kumulativ oder alternativ - auch das korrekte Einführen des Filterelementes mit vorschriftsmäßiger Vorder-und Rückseite zum Verhindern einer versehentlich um 180° verdrehten Einbausituation. Die bzw. an korrespondierenden Montagehilfselemente am Filterelement der Gehäuseinnenwand stellen sicher, dass das Filterelement zumindest unter einem der vorgenannten Aspekte, zweckmäßig aber unter mindestens zwei bzw. unter allen Aspekten die richtige, gewünschte Einbaulage einnimmt. Wird das Filterelement versehentlich falsch eingesetzt, so greifen die Montagehilfselemente nicht mehr ineinander und können mit den normalen Montagekräften auch nicht in eine ineinander greifende Position verbracht werden, wodurch die Fertigstellung der Montage verhindert wird. Dies kann von der die Montage durchführenden Person bemerkt werden, woraufhin das Filterelement in seine korrekte Lage gebracht und die Montage in der vorgesehenen Weise fertig gestellt werden kann.

Die Montagehilfselemente am Gehäuse und am Filterelement sind in zweckmäßiger Ausführung als Ausnehmung bzw. als korrespondierende Erhebung ausgeführt.

Grundsätzlich reicht ein Montagehilfselement jeweils am Filterelement und auf der Innenseite des Gehäuses für die Festlegung der korrekten Einbaulage aus. In zweckmäßiger Ausführung sind aber mehrere derartige Montagehilfselemente über den Umfang verteilt vorgesehen. Werden beispielsweise zwei derartige Montagehilfselementpaare oder auch mehr als zwei Montagehilfselementpaare eingesetzt, so kann zugleich ein versehentliches schiefwinkliges Einsetzen des Filterelementes in das Gehäuse des Fluidfilters zumindest weitgehend ausgeschlossen werden. Das Filterelement wird so weit in den Gehäuseinnenraum eingeschoben, bis sämtliche Montagehilfselementpaare in der vorgesehenen Weise ineinander greifen, wodurch automatisch die korrekte Endlage des Filterelementes erreicht wird, in welcher die Längsebene durch das Filterelement senkrecht zur Filterlängsachse steht.

Die Erhebung im Gehäuseinnenraum, die das gehäuseseitige Montagehilfselement darstellt, ist vorteilhaft als Sockel ausgebildet, der mit radialem Abstand zur Innenwand des Gehäuses angeordnet ist. Zwischen der Gehäuseinnenwand und dem Sockel ist ein Zwischenraum gebildet, der zur Aufnahme der die Ausnehmung begrenzenden Außenwand des Filterelementes dient. Diese Ausführung kann in vorteilhafter Weise mit einem Zentrierwandabschnitt kombiniert werden, der insbesondere unmittelbar an der Innenwand des Gehäuses vorgesehen ist und bevorzugt eine Zentrierrampe bildet, die gegenüber der Filterlängsachse einen Winkel einschließt. Beim axialen Einschieben des Filterelementes gleitet die radiale Außenseite des Filterelementes am Zentrierwandabschnitt entlang und wird hierdurch unmittelbar in den Zwischenraum zwischen der Innenwand des Gehäuses und der benachbarten Wandseite des Sockels geführt, der das gehäuseseitige Montagehilfselement bildet. Zweckmäßigerweise ist jedem Sockel genau ein Zentrierwandabschnitt zugeordnet.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine Darstellung eines nicht erfindungsgemäßen Fluidfilters in teilweisem Aufriss mit einem in das Gehäuse eingesetzten Filterelement, das mittels Montagehilfselementen im Gehäuse des Filters zentriert ist,
Fig. 2 eine nicht erfindungsgemäße detaillierte Ansicht des eingesetzten Filterelementes im Filtergehäuse, mit einer dichtungsseitigen Ausnehmung als Montagehilfselement, in die ein am Gehäuse angeordneter Sockel als gehäuseseitiges Montagehilfselement einragt,
Fig. 3 eine nicht erfindungsgemäße Draufsicht auf ein scheibenförmiges Filterelement mit diametral gegenüberliegenden Ausnehmungen zur Aufnahme der gehäuseseitigen Sockel,
Fig. 4 eine nicht erfindungsgemäße Schnittdarstellung gemäß Schnittlinie IV-IV aus Fig. 3 durch das Filterelement,
Fig. 5 eine nicht erfindungsgemäße perspektivische Ansicht des Gehäuseinnenraums, in den das Filterelement einzusetzen sind,
Fig. 6 eine nicht erfindungsgemäße, Fig. 2 entsprechende Darstellung, jedoch mit dem Filterelement in einer um 180° verkehrten, falsch eingesetzten Lage,
Fig. 7 eine perspektivische Darstellung eines in das Gehäuse des Fluidfilter einzuführenden Bauteiles, das im radial außen liegenden Randbereich eine Ausnehmung zur Aufnahme eines Blockierteils aufweist, welches ein falsches Einsetzen des Bauteiles in das Gehäuse verhindert,
Fig. 8 in perspektivischer Darstellung das als Rahmen ausgeführte Bauteil, welches mit dem Filterelement zu verbinden ist, einschließlich eingestecktem Blockierteil,
Fig. 9 einen Schnitt durch das Blockierteil und den Rahmen,
Fig. 10 bis 13 das Blockierteil in verschiedenen Ansichten.

In den Figuren sind gleiche Bauteile mit gleichen Bezugszeichen versehen.

### Ausführungsform(en) der Erfindung

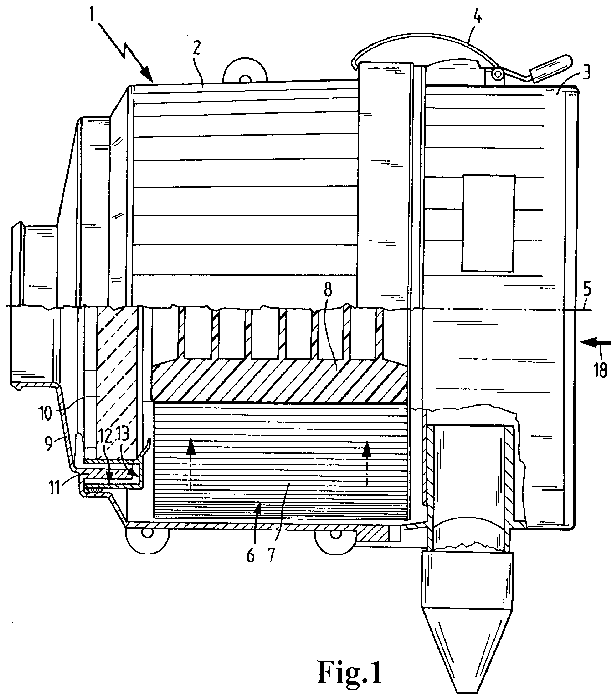

Der in Fig. 1 dargestellte Fluidfilter 1 wird zur Filtration von Flüssigkeiten oder Gasen in Kraftfahrzeugen, insbesondere zur Filtration der Ansaugluft in Brennkraftmaschinen eingesetzt. In einem Filtergehäuse 2, das einen zylindrischen oder elliptischen Querschnitt aufweist, befindet sich ein Gehäuseinnenraum zur Aufnahme eines Filterelementes 6, das hohlzylindrisch ausgebildet ist und ein um ein Stützgerüst 8 gewickeltes Filtermaterial 7 aufweist. Das Filterelement 6 wird axial von dem zu reinigenden Fluid durchströmt. Das Filtergehäuse 2 weist an einer Stirnseite einen abnehmbaren Gehäusedeckel 3 auf, der mithilfe von Schließbügeln 4 am Filtergehäuse 2 zu fixieren ist. Die Längsachse des Fluidfilters ist mit Bezugszeichen 5 gekennzeichnet. Die Einschubrichtung des Filterelementes 6 bei geöffnetem Deckel 3 in den Innenraum des Filtergehäuses 2 ist mit Bezugszeichen 18 gekennzeichnet.

Im Bereich des dem Deckel 3 gegenüberliegenden Gehäusebodens 9 verjüngt sich das Filtergehäuse 2. An dieser Seite des Filtergehäuses liegt im Gehäuseinnenraum ein Sekundärfilterelement 10, das an der Stirnseite des eingesetzten Filterelementes 6 angeordnet ist und die Rohseite von der Reinseite strömungsdicht separiert. Um einen korrekten Sitz des Filterelementes 10 im Innenraum des Filtergehäuses 2 in der Einbaulage sicherzustellen, sind Montagehilfselemente 11 und 12 an der Innenwand des Filtergehäuses 2 bzw. am Filterelement 10 vorgesehen, die korrespondierend zueinander ausgebildet sind und in der Einbaulage ineinander greifen. Das gehäuseseitige Montagehilfselement 11 ist als Sockel ausgeführt, der sich vom Boden 9 des Filtergehäuses ausgehend in Achsrichtung erstreckt und einteilig mit der Wandung des Gehäuses ausgebildet ist. Dieser Sockel 11 liegt mit geringem radialen Abstand zur radial weiter außen liegenden Innenwand des Filtergehäuses 2.

Das dichtungsseitige Montagehilfselement 12 ist als Ausnehmung im Filterelement 10 ausgebildet, in die der Sockel 11 des Filtergehäuses 2 einragt. Die Ausnehmung 12 ist am Boden 13 verschlossen ausgeführt, wodurch sichergestellt ist, dass bei verkehrtem Einsetzen des Filterelementes 10, also mit dem Boden 13 voraus, der Sockel 11 nicht in die Ausnehmung 12 einragen kann, sondern vielmehr unmittelbar am Boden 13 anliegt, so dass die axiale Endposition des Filterelementes 10 nicht erreicht und damit auch der Deckel 3 nicht verschlossen werden kann.

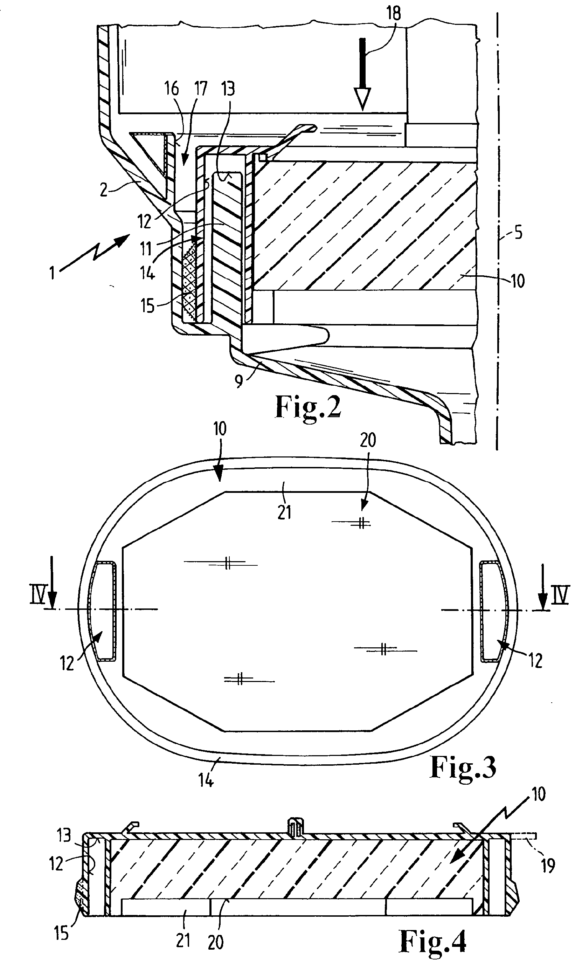

Wie der vergrößerten Darstellung nach Fig. 2 zu entnehmen, ist auf der radialen Außenseite der Filteraußenwand 14, die die Ausnehmung 12 radial nach außen begrenzt, ein Dichtungswulst 15 angeordnet, der in den Zwischenraum 17 einragt, welcher zwischen dem gehäuseseitigen Sockel 11 und der Gehäusewand gebildet ist. Der Dichtungswulst 15 erstreckt sich radial nach außen und sorgt für eine sichere Abdichtung zwischen dem Filterelement 10 und der Gehäuseinnenwand des Filtergehäuses 2.

Des Weiteren geht aus Fig. 2 hervor, dass gehäuseseitig ein Zentrierwandabschnitt 16 vorgesehen ist, der sich in Achsrichtung erstreckt und einteilig mit der Gehäusewandung ausgebildet ist, jedoch gegenüber dieser geringfügig radial nach innen versetzt ist. In Einschubrichtung 18 des Filterelementes 10 gesehen ist der Zentrierwandabschnitt 16 dem Sockel 11 axial vorgelagert und außerdem gegenüber diesem radial nach außen versetzt, so dass zwischen dem Sockel 11 und dem Zentrierwandabschnitt 16 ein Zwischenraum 17 gebildet ist. Der Zentrierwandabschnitt 16 hat die Aufgabe, das in Einschubrichtung 18 axial einzuführende Filterelement 10 in die gewünschte, korrekte Zentrierposition, bezogen auf die Radialrichtung zu zwingen. Es kann zweckmäßig sein, den Zentrierwandabschnitt 16 mit einer geringfügigen Neigung zu versehen, so dass die freie Stirnseite des Zentrierwandabschnittes 16 radial nach außen gerichtet ist, wodurch der Zentrierwandabschnitt 16 die Form einer Zentrierrampe erhält und das Einführen des Filterelementes 10 erleichtert ist.

In den Figuren 3 und 4 ist das Filterelement 10 in Einzeldarstellung gezeigt. Das Filterelement 10 ist als etwa ellipsenförmige Scheibe ausgebildet, wobei diametral gegenüberliegend die zwei Ausnehmungen 12 in die Schmalseiten des Filterelementes 10 eingebracht sind. Das Filterelement 10 weist eine Dichtseite 20 auf, die von einem umlaufenden, axial sich erhebenden Dichtungsrand 21 eingefasst ist.

Gemäß Fig. 4 ist optional am Filterelement 10 ein zusätzlicher, radial überstehender Blockierabschnitt 19 angeordnet, der einteilig mit dem Rahmen des Filterelements 10 ausgebildet ist und sich axial auf der der Dichtseite 20 gegenüberliegenden Seite befindet. Bei einem versehentlichen verkehrten Einsetzen des Filterelementes 10 in den Gehäuseinnenraum gelangt dieser Blockierabschnitt 19 in Kontakt entweder mit der sich verjüngenden Gehäuseinnenwand oder einem sonstigen Wandteil des Gehäuses, beispielsweise dem Zentrierwandabschnitt 16 (Fig. 2). Hierdurch wird ein weiteres axiales Einschieben bis zur endgültigen Einbaulage des Filterelementes 10 blockiert. Dieser Blockierabschnitt 19 kann optional zusätzlich am Filterelement 10 vorgesehen sein.

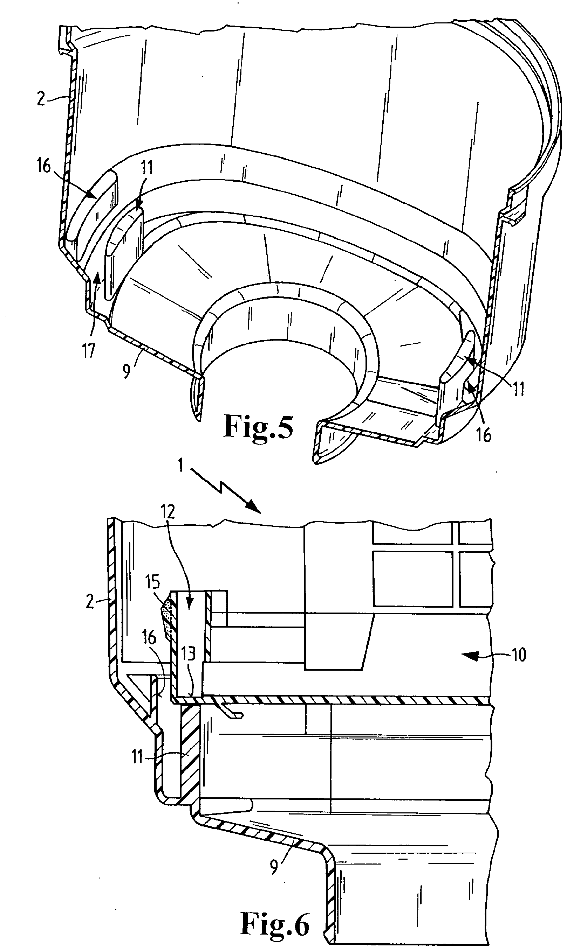

In Fig. 5 ist der Gehäuseinnenraum des Filtergehäuses 2 in perspektivischer Darstellung gezeigt. Zu erkennen sind die diametral gegenüberliegenden Sockel 11, die sich vom Boden 9 des Filtergehäuses ausgehend axial nach oben erstrecken und geringfügig radial nach innen versetzt sind, wodurch der Zwischenraum 17 zwischen Sockel 11 und Gehäuseinnenwand gebildet ist. Zu erkennen sind auch die Zentrierwandabschnitte 16, die unmittelbar benachbart zu den Sockeln 11 angeordnet sind. Jedem Sockel 11 ist jeweils ein Zentrierwandabschnitt 16 zugeordnet. Sowohl die Sockel 11 als auch die Zentrierwandabschnitte 16 besitzen eine Erstreckung in Umfangsrichtung des Filtergehäuses 2.

In Fig. 6 ist ein Filterelement 10 in verkehrter Lage dargestellt. In dieser verkehrten Lage gelangt der gehäuseseitige Sockel 11 in Kontakt mit dem Boden 13 der Ausnehmung 12 im Filterelement 10, wodurch ein vollständiges axiales Einschieben des Filterelementes 10 bis zur endgültigen Einbaulage verhindert ist.

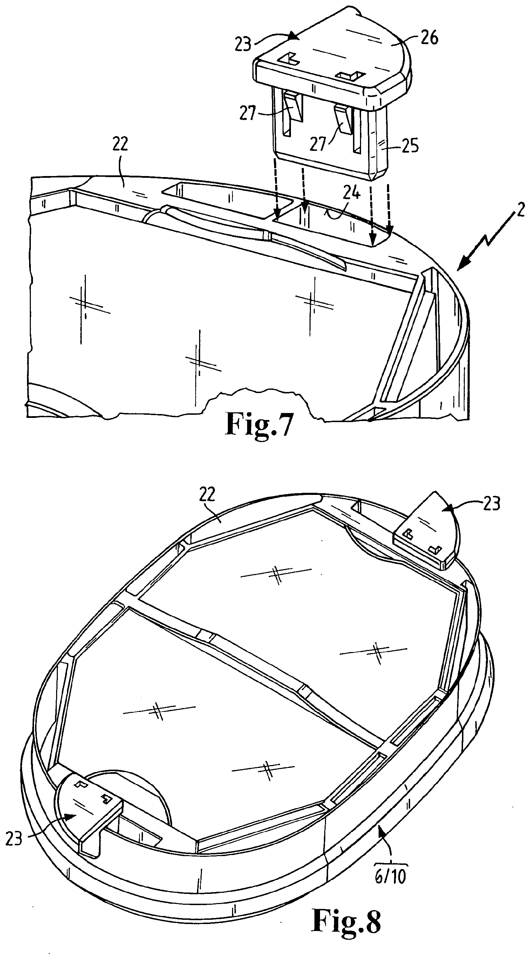

In Fig. 7 ist ein Rahmen 22 dargestellt, der mit einem in das Gehäuse 2 des Fluidfilters 1 einzusetzenden Bauteil verbunden ist. Um sicherzustellen, dass dieses Bauteil korrekt in das Gehäuse eingeführt wird, ist ein Blockierteil 23 vorgesehen, das mit dem Rahmen 22 verbunden wird und die Mantelfläche des Rahmens sowie des Bauteiles, welches vom Rahmen eingefasst wird, in Achsrichtung und in Radialrichtung überragt. Dadurch ist sichergestellt, dass der Rahmen 22 einschließlich des mit dem Rahmen verbundenen Bauteiles nur in der vorgeschriebenen Weise in das Gehäuse des Fluidfilters eingesetzt werden kann.

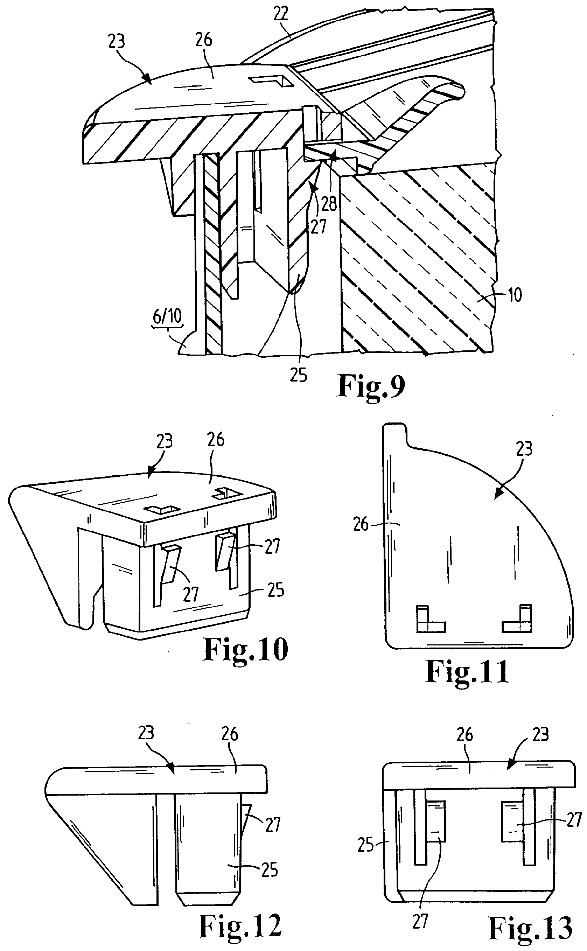

Im radial außen liegenden Bereich ist in den Rahmen 22 eine Ausnehmung 24 eingebracht, in die ein Sockel 25 des Blockierteils 23 axial einzustecken ist. Der Sockel 25 ist mit einem Kopf 26 größerer Umfangskontur verbunden, die kreissegmentförmig ausgebildet ist und sich insbesondere über ein Winkelsegment von 90° erstreckt. Der Kopf 26 besitzt eine größere Querschnittsfläche als der Sockel 25 und ragt, wie insbesondere den Fig. 8 und 9 zu entnehmen ist, über die radiale Außenseite des Rahmens 22 hinaus. Aus Fig. 8 geht auch hervor, dass insgesamt zwei Blockierteile 23 am Rahmen 22 diametral gegenüberliegend angeordnet sind. Die Blockierteile 23 befinden sich an den Schmalseiten des etwa oval ausgebildeten, aus Kunststoff bestehenden Rahmens 22.

Der Rahmen 22 fasst das Filterelement 10 ein, die Blockierteile 23 bilden die Montagehilfselemente, um den Rahmen 22 einschließlich Filterelement 10 in der richtigen, vorbestimmten Weise in das Gehäuse des Fluidfilters einzuführen und ein versehentlich falsches Einsetzen zu verhindern. Möglich ist es aber auch, den Rahmen 22 einschließlich der Blockierteile 23 am Filterelement vorzusehen, welches in das Gehäuse eingeführt wird. Diese Ausführung kann unabhängig von der Ausführung des Filterelementes 10 mit dem Montagehilfselement realisiert werden.

Wie den Fig. 7 und 9 in Verbindung mit den Einzeldarstellungen des Blockierteils 23 nach den Fig. 10 bis 13 zu entnehmen, sind am Sockel 25 des Blockierteiles 23 zwei parallele, in Achsrichtung des Sockels verlaufende Rastvorsprünge 27 angeordnet, die eine unmittelbar unterhalb des Kopfes 26 liegende Rastaufnahme begrenzen. In die Rastaufnahme ragt in der am Rahmen 22 montierten Position des Blockierteils 23 ein Schenkel eines Rastglieds 28 ein (Fig. 9), das mit dem Rahmen 22 verbunden und insbesondere einteilig mit diesem ausgebildet ist. Auf diese Weise wird bei in die Ausnehmung 24 eingesetzter Position des Blockierteiles 23 eine Verrastung erreicht.

## Patentansprüche

1. Fluidfilter, mit einem Filterelement (10), das in ein Filtergehäuse (2) einsetzbar ist, wobei das Filterelement (10) mindestens ein Montagehilfselement (12) aufweist, dem ein korrespondierendes, gehäuseseitiges Montagehilfselement (11) zugeordnet ist, derart, dass das gehäuseseitige Montagehilfselement (11) und das filterseitige Montagehilfselement (12) in Einbaulage ineinander greifen, wobei am Filterelement (10) ein radial überstehendes Blockierteil (23) angeordnet ist, **dadurch gekennzeichnet, dass** das Filterelement (10) scheibenförmig ausgebildet ist, wobei das Montagehilfselement als separat ausgebildetes Blockierteil (23) ausgebildet ist, das am Filterelement (10) angeordnet ist, wobei das Blockierteil (23) in einer Ausnehmung (24) am Filterelement einführbar ist und das Filterelement (10) von einem Rahmen (22) eingefasst ist und das Blockierteil (23) an dem Rahmen (22) angeordnet ist.

2. Fluidfilter nach Anspruch 1, **dadurch gekennzeichnet, dass** die Montagehilfselemente am Gehäuse (2) und am Filterelement (10) als Erhebung (11) bzw. als korrespondierende Ausnehmung (12) ausgebildet sind.

3. Fluidfilter nach Anspruch 2, **dadurch gekennzeichnet, dass** die Ausnehmung (12) in das Filterelement (10) eingebracht ist.

4. Fluidfilter nach Anspruch 3, **dadurch gekennzeichnet, dass** der Boden (13) der Ausnehmung (12) verschlossen ist.

5. Fluidfilter nach Anspruch 3 oder 4, **dadurch gekennzeichnet, dass** die Erhebung als Sockel (11) im Gehäuseinnenraum ausgebildet ist, der mit radialem Abstand zur Innenwand des Gehäuses (2) angeordnet ist.

6. Fluidfilter nach einem der Ansprüche 1 bis 5, **dadurch gekennzeichnet, dass** die Montagehilfselemente (11, 12) in axialer Einschubrichtung des Filterelements (6, 10) in eine ineinander greifende Stellung zu verbringen sind.

7. Fluidfilter nach einem der Ansprüche 1 bis 6, **dadurch gekennzeichnet, dass** über den Umfang verteilt mindestens zwei korrespondierende Montagehilfselemente (11, 12) angeordnet sind.

8. Fluidfilter nach einem der Ansprüche 1 bis 7, **dadurch gekennzeichnet, dass** der Gehäuseinnenraum einen sich verjüngenden Querschnitt aufweist.

9. Fluidfilter nach einem der Ansprüche 1 bis 8, **dadurch gekennzeichnet, dass** an der Innenwand des Gehäuses (2) ein Zentrierwandabschnitt (16) angeordnet ist, der das Filterelement (10) beim axialen Einschieben in die Einbaulage zentriert.

10. Fluidfilter nach Anspruch 9, **dadurch gekennzeichnet, dass** der Zentrierwandabschnitt (16) rampenförmig ausgebildet ist und mit der Einschubrichtung des Filterelements (10) einen Winkel einschließt.

11. Fluidfilter nach einem der vorhergehenden Ansprüche, **dadurch gekennzeichnet, dass** das Blockierteil (23) die Mantelfläche des Filterelements (10) axial und radial überragt.

## Claims

1. Fluid filter, having a filter element (10) which is insertable into a filter housing (2), wherein the filter element (10) features at least one mounting aid element (12) to which a corresponding housing-sided mounting aid element (11) is allocated in such a way that the housing-sided mounting aid element (11) and the filter-sided mounting aid element (12) engage in installation position, wherein a radially protruding blocking part (23) is disposed at the filter element (10), **characterized in that** the filter element (10) has a disk-shaped design, wherein the mounting aid element is designed as separately designed blocking part (23) which is disposed at the filter element (10), wherein the blocking part (23) is insertable in a recess (24) at the filter element and the filter element (10) is surrounded by a frame (22) and the blocking part (23) is disposed at the frame (22).

2. Fluid filter according to claim 1, **characterized in that** the mounting aid elements at the housing (2) and at the filter element (10) are realized as projection (11) or as corresponding recess (12).

3. Fluid filter according to claim 2, **characterized in that** the recess (12) is realized in the filter element (10).

4. Fluid filter according to claim 3, **characterized in that** the bottom (13) of the recess (12) is closed.

5. Fluid filter according to claim 3 or 4, **characterized in that** the projection is designed as pedestal (11) in the housing interior area which is disposed at a radial distance to the inner wall of the housing (2).

6. Fluid filter according to one of the claims 1 to 5, **characterized in that** the mounting aid elements (11, 12) have to be brought in axial insertion direction of the filter element (6, 10) into an engaging position.

7. Fluid filter according to one of the claims 1 to 6, **characterized in that** at least two corresponding mounting aid elements (11, 12) are disposed across the circumference.

8. Fluid filter according to one of the claims 1 to 7, **characterized in that** the housing interior area features a tapering cross-section.

9. Fluid filter according to one of the claims 1 to 8, **characterized in that** a centering wall section (16), which centers the filter element (10) during axial insertion into the installation position, is disposed at the inner wall of the housing (2).

10. Fluid filter according to claim 9, **characterized in that** the centering wall section (16) has a ramp-shaped design and forms an angle with the insertion direction of the filter element (10).

11. Fluid filter according to one of the above claims, **characterized in that** the blocking part (23) protrudes axially and radially the circumferential surface of the filter element (10).

## Revendications

1. Filtre à fluides, avec un élément filtrant (10) pouvant être inséré dans un boîtier de filtre (2), l'élément filtrant (10) présentant au moins un élément auxiliaire de montage (12) auquel un élément auxiliaire de montage (11) correspondant côté boîtier est assigné de sorte que l'élément auxiliaire de montage (11) côté boîtier et l'élément auxiliaire de montage (12) côté filtre s'engrènent dans la position de montage, un élément de blocage (23) dépassant en sens radial étant disposé sur l'élément filtrant (10), **caractérisé en ce que** l'élément filtrant (10) est réalisé en forme de disque, l'élément auxiliaire de montage étant réalisé en tant qu'élément de blocage (23) réalisé séparément qui est disposé sur l'élément filtrant (10), l'élément de blocage (23) pouvant être inséré dans un évidement (24) sur l'élément filtrant et l'élément filtrant (10) étant bordé par un cadre (22) et l'élément de blocage (23) étant disposé sur le cadre (22).

2. Filtre à fluides selon la revendication 1, **caractérisé en ce que** les éléments auxiliaires de montage sur le boîtier (2) et sur l'élément filtrant (10) sont réalisés en forme de saillie (11) ou en forme d'évidement (12) correspondant.

3. Filtre à fluides selon la revendication 2, **caractérisé en ce que** l'évidement (12) est ménagé dans l'élément filtrant (10).

4. Filtre à fluides selon la revendication 3, **caractérisé en ce que** le fond (13) de l'évidement (12) est fermé.

5. Filtre à fluides selon la revendication 3 ou 4, **caractérisé en ce que** la saillie est réalisée en forme de socle (11) à l'intérieur du boîtier, le socle étant disposé à une distance radiale à la paroi intérieure du boîtier (2).

6. Filtre à fluides selon l'une des revendications 1 à 5, **caractérisé en ce que** les éléments auxiliaires de montage (11, 12) sont à placer dans le sens d'insertion axial de l'élément filtrant (6, 10) dans une position dans laquelle ils s'engrènent.

7. Filtre à fluides selon l'une des revendications 1 à 6, **caractérisé en ce qu'**au moins deux éléments auxiliaires de montage correspondants (11, 12) sont réparties sur le pourtour.

8. Filtre à fluides selon l'une des revendications 1 à 7, **caractérisé en ce que** l'intérieur du boîtier présente une section diminuante.

9. Filtre à fluides selon l'une des revendications 1 à 8, **caractérisé en ce que** sur la paroi intérieure du boîtier (2) est disposée une section de paroi de centrage (16) qui centre l'élément filtrant (10) lors de l'introduction axiale dans la position de montage.

10. Filtre à fluides selon la revendication 9, **caractérisé en ce que** la section de paroi de centrage (16) est réalisée en forme de rampe et forme un angle avec le sens d'insertion de l'élément filtrant (10).

11. Filtre à fluides selon l'une des revendications précédentes, **caractérisé en ce que** l'élément de blocage (23) dépasse en sens axial et latéral la surface externe de l'élément filtrant (10).
